# EUROPÄISCHE PATENTSCHRIFT

(11) **EP 0 841 968 B1**
(45) Veröffentlichungstag und Bekanntmachung des Hinweises auf die Patenterteilung: **06.05.1999**
(21) Anmeldenummer: 96920678.8
(22) Anmeldetag: 08.07.1996
(51) Int. Cl.: A62D 3/00

(54) **VERFAHREN ZUR DEMERKURISATION**
MERCURY REMOVAL PROCESS
PROCEDE D'ELIMINATION DE MERCURE

(30) Priorität: 10.07.1995 CH 2002/95
(43) Veröffentlichungstag der Anmeldung: 20.05.1998
(73) Patentinhaber: DECO-HANULIK AG, 8049 Zürich (CH)
(72) Erfinder: HANULIK, Jozef, CH-8032 Zürich (CH)
(74) Vertreter: Patentanwaltsbüro Feldmann AG
(86) Internationale Anmeldenummer: CH9600252
(87) Internationale Veröffentlichungsnummer: WO9702864

(56) Entgegenhaltungen:
- EP-A- 0 423 039
- DE-A- 4 243 313
- AUFBEREITUNGS TECHNIK, Bd. 35, Nr. 6, 1.Juni 1994, Seiten 299-306, XP000513915 BROADBENT C P ET AL: "HOCHTEMPERATUR-OXIDATIONSVERFAHREN ZUM DEKONTAMINIEREN HG-HALTIGER ABFALLE HIGH TEMPERATURE OXIDATION PROCESS FOR DECONTAMINATION OF MERCURY CONTAINING WASTES"
- PATENT ABSTRACTS OF JAPAN vol. 010, no. 226 (C-364), 7.August 1986 & JP,A,61 061687 (NICHIJIYUU RES CENTER:KK), 29.März 1986,
- PATENT ABSTRACTS OF JAPAN vol. 010, no. 166 (C-353), 13.Juni 1986 & JP,A,61 018487 (KANEKO SHOJI KK), 27.Januar 1986,

## Beschreibung

Die vorliegende Erfindung betrifft ein Verfahren zur Demerkurisation von mit Quecksilber kontaminierten, organischen, mineralischen und/oder metallischen Stoffen durch thermische Behandlung in einem Ofen, wobei die Quecksilberanteile verdampfen und anschliessend aus den Verbrennungsgasen ausgewaschen und abgetrennt werden.

Weltweit sind ernorme Mengen von quecksilberkontaminierten Altlasten bekannt. Diese stammen teilweise von Elektrolyseanlagen zur Herstellung von alkalischen Metallen oder Chlor, von alten Deponien und von unsachgemäss geführten Entsorgungsfirmen. Wegen der hohen Verschleppungsgefahr von Quecksilber sind nicht nur die eigentlichen Produktionsanlagen kontaminiert, sondern meistens auch die gesamten Gebäude, das umliegende Erdreich, Mobiliar, Kabel usw. Hinzu kommen noch stark kontaminierte Abfälle wie diverse Produktionsfehlchargen und Zahnarztabfälle. Entsprechend setzen sich die zu dekontaminierenden Stoffe aus mineralischen und/oder metallischen Stoffen zusammen. Hinzu kommen auch noch organische Anteile, wie Papier, Holz, Kunststoffe, die ebenfalls mit Quecksilber kontaminiert sein können.

Einen wesentlichen Kostenpunkt bei der Demerkurisation stellt die Ermittlung des Grades der Kontamination dar. Die durchzuführende Analyse ist zeitaufwendig und entsprechend teuer und muss insbesondere bei Gebäuden und Anlagen in einem flächendeckenden Muster erfolgen. Gelingt es, die Kosten der Demerkurisation erheblich zu senken, so ist es preiswerter, die Anzahl Messungen zu senken und dafür flächendeckend zu dekontaminieren. Genau hierauf zielt die Erfindung ab. Es ist folglich die Aufgabe der vorliegenden Erfindung, ein besonders kostengünstiges Verfahren zur Demerkurisation zu schaffen, das zusätzlich zu einem besonders hohen Grad der Demerkurisation führt.

Diese Aufgabe löst ein Verfahren mit den Merkmalen des Patentanspruches 1.

Neben den nachfolgend noch zu beschreibenden thermischen Behandlungsverfahren zur Demerkurisation sind chemische Extraktionsanlagen zur Demerkurisation bekannt. Diese Anlagen sind äusserst aufwendig und meist nur für kleine Mengen von zu dekontaminierenden Materialien geeignet. Handelt es sich bei den zu dekontaminierenden Ausgangsstoffen um ein Gemisch, so lässt sich zudem eine Produktreinheit unter 20 ppm Hg kaum realisieren.

Es sind verschiedene thermische Demerkurisationsanlagen bekannt. Diese arbeiten mit indirekt beheizten Elektro- oder Gasofen, bei denen die Beheizung von aussen erfolgt. Das verdampfte Quecksilber muss aus dem Ofen evakuiert werden. Hierzu wird der Ofen in mehreren Zyklen mit Stickstoff oder Luft gespült und danach wieder evakuiert. Je nach der Anzahl der abwechslungsweise durchgeführten Evakuationen und Spülungen lässt sich eine Reinheit von unter 1 ppm erreichen. Die Dekontaminationskosten belaufen sich auf ca. 10-20'000 DM/t.

Prinzipiell wäre es möglich, ein Demerkurisationsverfahren mittels einem Etagenofen durchzuführen. Vom Erfinder durchgeführte Versuche haben jedoch gezeigt, dass ein solcher Ofen hierfür weniger geeignet ist, da die Diffusionswege in einem Etagenofen relativ lang sind. Hinzu kommt, dass das Verfahren bei relativ hohen Temperaturen von über 800°C erfolgen muss und die Verweilzeit der zu dekontaminierenden Stoffe im Ofen sehr lang sein muss, mindestens mehrere Stunden. Hinzu kommt, dass die Konstruktion und der Unterhalt von Etagenöfen sehr teuer ist.

Vereinzelte Versuche zur Demerkurisation in Rotationsöfen sind durchgeführt worden, doch vermochten die Resultate nicht zu überzeugen und entsprechend wurde eine grossindustrielle Anlage nie realisiert. Bei diesen Versuchen wurde mit bekannten Rotationsöfen gearbeitet, die mit feuerfesten Mineralstoffen ausgekleidet sind. An der mineralischen Auskleidung erfolgt ein grosser Abrieb, der die Endprodukte entsprechend belastet. Dies ist insbesondere ein Problem, wenn die zu dekontaminierenden Ausgangsstoffe mineralstofffrei sind. Das aus dem Prozess gewonnene Endprodukt ist dann entsprechend mit Mineralstoffen stark belastet. Die mineralisch ausgekleideten Rotationsöfen führen dazu, dass das Verfahren unflexibel wird, weil der Ofen nur langsam angefahren und abgestellt werden kann, da Temperaturschocks zur Zerstörung der mineralischen Auskleidung führen. Die entsprechende Trägheit des Prozesses macht diesen kaum kontrollier- und steuerbar. Temperaturmessungen sind bei diesem Verfahren lediglich am Ein- und Ausdgang des Rotationsofens möglich. Gelangen Stoffe in den Ofen, die stark exotherm verbrennen, so besteht die grosse Gefahr einer Ueberhitzung, wobei ein Durchschmelzen des Ofens nicht auszuschliessen ist.

Beim erfindungsgemässen Verfahren wird nunmehr mit einem nicht ausgemauerten Drehrohrofen gearbeitet, der auch von aussen her nicht isoliert ist, so dass die Temperaturführung im Drehrohrofen von aussen her über den gesamten Förderweg im Drehrohrofen exakt überwacht werden kann mittels mehreren Wärmesensoren und die Temperaturführung entsprechend durch die Luftzufuhr genau regelbar ist. Das erfindungsgemässe Verfahren arbeitet im Vergleich zu bekannten Verfahren sehr viel schneller, ist kostengünstiger und der Energieverbrauch im Vergleich zu bekannten Verfahren erheblich niedriger. Weitere vorteilhafte Ausgestaltungsformen des Verfahrens ergeben sich aus den abhängigen Ansprüchen, deren Bedeutung in der nachfolgenden Beschreibung erläutert ist.

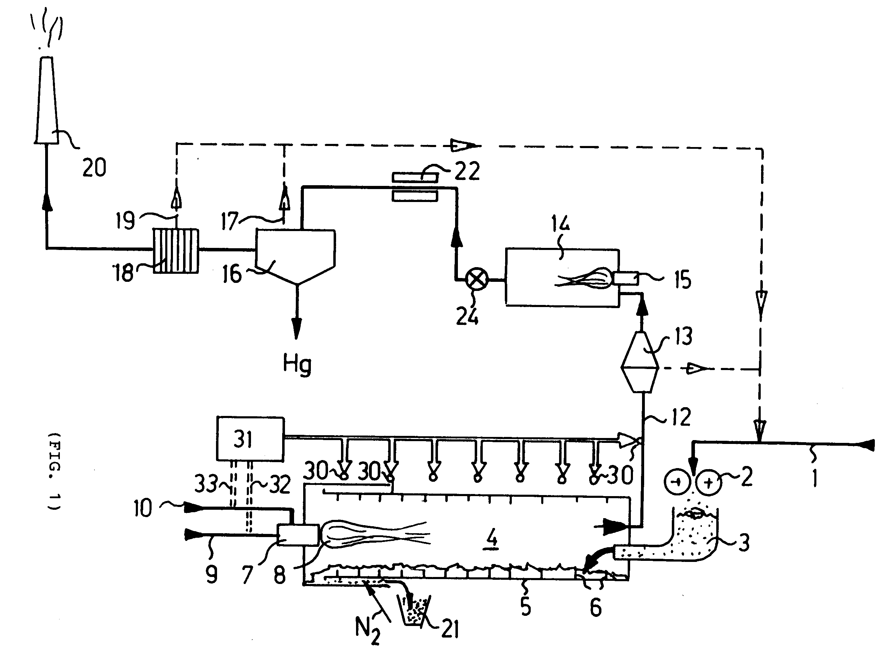

In der anliegenden einzigen Figur ist ein Ablaufschema des Verfahrens dargestellt.

Das anliegende, zu dekontaminierende Material wird über eine Zufuhrleitung 1 zu einer Zerkleinerungsvorrichtung 2 geführt. Hier werden die kontaminierten Stoffe zershredded, gemahlen oder zerschnitten oder sonstwie zerkleinert. Prinzipiell kann der Ofen mit jedem beliebigen Materialgemisch beschickt werden. Es ist jedoch von Vorteil, hierbei die unterschiedlichen Hg-Diffusionszeiten der verschiedenen Materialien zu berücksichtigen und entsprechend beispielsweise mineralische Stoffe auf eine Korngrösse von ca. 5 mm zu zerkleinern, während bei metallischen Teilen Abmessungen bis zu 100 mm durchaus zulässig sind. Das zerkleinerte Gut gelangt in eine Beschickungsvorrichtung 3, die einen minimalen Vorratsbunker aufweist, um eine möglichst gleichmässige, kontinuierliche Beschickung des Ofens sicherzustellen.

Der eigentliche Beschickungsofen ist mit 4 bezeichnet. Drehrohröfen dieser Bauart sind an sich bekannt und werden seit Jahren erfolgreich für die Trocknung oder Verbrennung kommunaler und industrieller Schlämme eingesetzt. Hierbei handelt es sich meist um Klär- und Fallschlämme oder Rechengut beziehungsweise Oel- und Farbschlämme, die entsorgt werden sollen. Der Innenraum des Drehrohrofens ist nicht ausgemauert. Der Drehrohrofen ist auch von aussen nicht isoliert. Entsprechend wird der Ofen von der Aussenatmosphäre gekühlt. Die abstrahlende Hitze des nicht ausgemauerten Drehrohr 5 ergibt somit eine direkte Indikation über die im Drehrohrofen herrschenden Temperaturen, die sich direkt aus der Abstrahlungshitze des Drehrohres ergeben. An dem der Beschickungsvorrichtung 3 gegenüberliegenden Ende ist am Drehrohrofen 4 ein Primärbrenner 7 angeordnet. Dieser erzeugt eine Flamme 8. Das zu dekontaminierende Material durchläuft den Ofen in der sogenannten Gegenstromrichtung, das heisst in Richtung zur Flamme 8 hin. Durch die Brennstoffzufuhr 9 einerseits und die Primärluftzufuhr 10 andererseits lässt sich die Temperatur im Ofen regeln. Die Temperatur im Drehrohrofen wird im wesentlichen durch die Art der zu dekontaminierenden Stoffe bestimmt. Die Temperaturen im Ofeninnenraum bewegen sich ungefähr zwischen 600 und 900°C. Ein wesentlicher Indikator ist insbesondere die Temperatur der aus dem Ofen austretenden Gase. Diese sollten zwischen 500 und 850°C liegen. Bevorzugt wird eine Temperatur um 650°C. Bei diesen Bedingungen liegt die Temperatur der Ofenwand innen bei ca. 500°C, während die Aussentemperatur der Ofenwand bei ca. 250-300°C liegt.

Bei den vorgenannten Temperaturen findet im Drehrohrofen 4 eine oxidative Verbrennung statt, wobei das Quecksilber verdampft und mit den Gasen ausgetragen wird. Die nach der Verbrennung ausgetragenen Verbrennungsprodukte weisen eine Restbelastung von weniger als 0,1 ppm Hg auf. Falls diese Reinheit nicht gefordert ist, kann das Verfahren auch so gefahren werden, dass die maximale Belastung am Ausgangsprodukt unterhalb 1 ppm oder in bestimmten Fällen unterhalb 5 ppm liegt. Die ausgetragenen Verbrennungsprodukte werden in einer Ascheauffangvorrichtung 21 gesammelt. Im einfachsten Fall können diese Verbrennungsprodukte direkt aus dem Drehrohr des Ofens ausgetragen werden. Es ist jedoch auch möglich, die bereits demerkurisierten Verbrennungsprodukte am Ende des Drehrohres des Ofens umzulenken und unter Bewegung und bei Luftabschluss auszutragen. Letztere Variante führt zu einer langsameren Abkühlung der Verbrennungsprodukte, wobei eine Dechlorierung stattfindet. Da die Dichtung eines Drehrohrofens nicht problemlos ist, kann die Verbrennung bzw. Oxidation im Auslaufspaltbereich durch die Einleitung von Alertgasen, beispielsweise N₂, unterbunden werden. Auf diese Weise erfolgt gleichzeitig ein Abbau der Restmengen von PCB und Rest-Dioxinen. Gegenüber einem direkten Austrag der Verbrennungsprodukte weisen die so unter Luftabschluss augetragenen Verbrennungsprodukte ca. 95% weniger Rest-Dioxine und PCB auf.

Die an der Materialeintragungsseite ausströmenden Gase werden über den Abzug 12 zu einem Zyklon 13 geführt. Die Gase werden vorzugsweise durch mindestens einen Ventilator oder eine Pumpe 24 vor oder nach der Nachbrennkammer 14 abgesogen. Damit wird im Drehrohrofen ein Unterdruck erzeugt, mit dem Hg-Kontaminationen durch Undichtigkeiten vermieden werden. Im Zyklon 13 werden die in den Verbrennungsgasen befindlichen Feststoffe ausgeschieden. Diese Feststoffe, die eventuell noch einen geringen Anteil an Quecksilber enthalten können, werden direkt vom Zyklon in den Prozess zurückgeführt. Die nunmehr annähernd feststofffreien Verbrennungsgase werden in eine Nachbrennkammer 14 geleitet, wo sie mittels eines Sekundärbrenners 15 nochmals auf Temperaturen von ca. 800-1200°C geheizt und verbrannt werden. Hierbei werden Spuren von PCB und Dioxinen sowie andere organische Verbindungen verbrannt. Die aus der Nachbrennkammer 14 austretenden Gase werden in einen Quench 22 abgeschreckt, um unerwünschte Folgereaktionen auszuschalten. In einem Wascher 16 werden die Quecksilberdämpfe ausgewaschen und das Quecksilber entnommen. Von Zeit zu Zeit wird das Waschwasser neutralisiert und die sedimentierenden Neutralisationsprodukte werden über die Rückführung 17 in den Prozess zurückgeführt. Die nun weitgehend sauberen Abgase werden, bevor sie über das Kamin 20 weggeführt werden, noch durch ein Aktivkohlefilter 18 geleitet. Die Hg beladenen Aktivkohlefilter 18 lassen sich ebenfalls in den Ofen 4 führen, wie dies der Rückführungspfeil 19 anzeigt.

Die gesamte Steuerung des Prozesses erfolgt im wesentlichen in Abhängigkeit von den herrschenden Temperaturen im Drehrohrofen 4. Ausserhalb des Drehrohrofens 4 sind daher über dessen gesamte Länge verteilt eine Vielzahl von Infrarotsensoren 30 als Temperaturfühler angeordnet. Ein weiterer Temperaturfühler kann direkt in der Verbrennungsgasableitung 12 angeordnet sein. Die Messdaten sämtlicher Sensoren 30 werden einer Regeleinheit 31 zugeleitet, wo mittels eines Prozessrechners entsprechend der Brennstoffzufuhr 9 und andererseits die Primärluftzufuhr 10 gesteuert wird.

Da sämtliche Produkte, die in dem Ofen verbrannt werden eine vollständige Dekontamination und Abgasreinigung durchlaufen, kann auch der Brenner 8 mit Abfallölen, die schwermetallhaltig sind oder mit Oelschlämmen, die Quecksilberanteile enthalten, beschickt werden. Dies erhöht die wirtschaftliche Effizienz des Verfahrens nochmals. Es ist jedoch festzuhalten, dass das Verfahren auch ohnedem bereits eine derart hohe Effizienz aufweist, dass für die Kosten zur Demerkurisation mit Betriebskosten von unter 700 USD/t bei einem Durchsatz von 5000 t/Jahr gerechnet werden kann. Bei Betriebskosten von 700 USD/t liegen die Kosten dieses Verfahrens rund zehnmal tiefer als bekannte Verfahren mit gleich tiefem Hg-Gehalt der dekontaminierten Stoffe. Die zweite steuerbare Grösse des Prozesses stellt die Aufenthaltsdauer der zu dekontaminierenden Stoffe im Drehrohrofen dar. Die Durchlaufgeschwindigkeit lässt sich am einfachsten über die Rotationsgeschwindigkeit des Drehrohrofens regeln. Die optimale Rotationsgeschwindigkeit des Drehrohrofens liegt zwischen 0,5 und 3 U/min. Die Rotationsgeschwindigkeit stellt auch sicher, dass die Stoffe im Ofen genügend bewegt werden und genügend oft im freien Fall durch den heissesten Kern des Innenraumes des Ofens hindurchfallen. Als dritte steuerbare Grösse kann der Durchsatz durch den Ofen variiert werden, wobei die Schuttschichtdicke entsprechend variiert und die Verweilzeit im Ofen sich entsprechend ändert.

Insbesondere, wenn bei der Verbrennung im Primärbrenner 7 Altöle verwendet werden, muss sichergestellt werden, dass ein genügender Heizwert erreicht wird. Entsprechend kann es sinnvoll sein, dem Altöl weitere Brennstoffe beizugeben, um den Heizwert zu steigern. Hierzu eignen sich neben flüssigen Brennstoffen auch Gase.

Weist der Drehrohrofen 4 keine spiralförmige Förderrippe zur Förderung des Materials auf, so kann die Fördergeschwindigkeit auch durch die Neigung des Drehrohrofens bestimmt werden.

Mit dem hier beschriebenen Demerkurisationsverfahren werden nicht nur die Quecksilberanteile wirkungsvoll und vollständig ausgeschieden, sondern auch Amalgame werden vollständig zerstört und somit gleich demerkurisiert.

Letztlich sei noch darauf hingewiesen, dass das Verfahren energetisch besonders vorteilhaft arbeitet. Das Verfahren kann sehr schnell auf die erforderliche Betriebstemperatur hochgefahren werden und ebenso schnell auch wieder abgeschaltet werden. Das schnelle Ansprechen des Ofens auf alle Steuergrössen und die optimalen Ueberwachungsmöglichkeiten schalten die Gefahr eines Durchbrennens des Ofens praktisch vollständig aus. Auch die Anlagekosten zur Realisation des erfindungsgemässen Verfahrens sind erheblich geringer als die Anlagekosten vergleichbarer Verfahren.

## Patentansprüche

1. Verfahren zur Demerkurisation von mit Quecksilber kontaminierten organischen mineralischen und/oder metallischen Stoffen durch thermische Behandlung in einem Ofen, wobei die Quecksilberanteile verdampfen und anschliessend aus den Verbrennungsgasen ausgewaschen und abgetrennt werden, wobei die kontaminierten Stoffe zerkleinert (2) kontinuierlich in einen Drehrohrofen (4) gegeben werden, durch den die Stoffe bei Unterdruck im Ofen im Gegenstrom zur Flammenrichtung durchlaufen, dadurch gekennzeichnet, dass das Verfahren in einem nicht ausgemauerten Drehrohrofen (4) durchgeführt wird, bei einer Ofenwandaussentemperatur von 200-300°C, wobei die Ofentemperatur von aussen an mehreren Stellen (30) des Ofens über den Förderweg verteilt gemessen wird und durch die Zufuhr von Sauerstoff (10) und Brennstoff (9) so im optimalen Temperaturbereich geregelt (31-34) wird, dass die aus dem Ofen austretenden Gase eine Temperatur zwischen 500° und 850°C aufweisen.

2. Verfahren nach Anspruch 1, dadurch gekennzeichnet, dass die demerkurisierten Verbrennungsprodukte direkt aus dem Drehrohr (5) des Ofens (4) ausgetragen werden.

3. Verfahren nach Anspruch 1, dadurch gekennzeichnet, dass die demerkurisierten Verbrennungsprodukte am Ende des Drehrohres (5) des Ofens (4) umgelenkt und unter Bewegung und Luftabschluss ausgetragen werden.

4. Verfahren nach Anspruch 1, dadurch gekennzeichnet, dass das Drehrohr (5) des Ofens (4) mit einer Rotationsgeschwindigkeit von 0,5-3 U/min rotiert wird.

5. Verfahren nach Anspruch 1, dadurch gekennzeichnet, dass die Abgase des Drehrohrofens (4) zuerst durch einen Zyklon (13) geführt werden, in dem die Feststoffe weitgehend ausgeschieden werden, die danach in den Ofen (4) zurückgeführt werden.

6. Verfahren nach Anspruch 5, dadurch gekennzeichnet, dass die von Feststoffen weitgehend befreiten Abgase in einem Nachbrenner (14) bei Temperaturen von 800-1200°C erhitzt werden, um PCB und Dioxine sowie andere organische Anteile vollständig zu verbrennen, worauf die erhitzten Abgase abgequencht (22) werden zur Vermeidung der Dioxinrekombination.

7. Verfahren nach Anspruch 1, dadurch gekennzeichnet, dass das Waschwasser das Quecksilber aus den Abgasen gewaschen (16) worden ist, neutralisiert wird und die aussedimentierten festen Neutralisationsprodukte in den Ofen (4) zurückgeführt (17) werden, während das metallische Quecksilber aus dem Prozess zur Wiederverwendung abgetrennt wird.

8. Verfahren nach Anspruch 1, dadurch gekennzeichnet, dass die gewaschenen Abgase durch ein Aktivkohlefilter (18) geführt werden, wobei die beladene Aktivkohle jeweils in den Drehrohrofen (4) zurückgeführt (19) und verbrannt wird.

9. Verfahren nach Anspruch 1, dadurch gekennzeichnet, dass der Drehrohrofen (4) mit schwermetallbelastetem Altöl befeuert wird.

10. Verfahren nach Anspruch 1, dadurch gekennzeichnet, dass der Drehrohrofen mit gasförmigen oder flüssigen Brennstoffen beheizt wird, denen kontaminierte Oelschlämme beigegeben werden.

## Claims

1. A process for removing mercury from organic, mineral and/or metallic materials contaminated with mercury, by means of a thermal treatment in a kiln, wherein the mercury components evaporate and are subsequently washed out of the combustion gases and are separated, wherein the contaminated materials are comminuted (2) and are continuously fed into a non-lined rotating tube kiln (4), through which the materials pass in a counterflow to the flame direction with the kiln at a vacuum, characterized in that the process is performed in a non-lined rotary tube kiln (4) at an outer wall temperature of 200 to 300°C, wherein the kiln temperature is measured from the outside at several locations (30) at the kiln distributed over the conveying path and is regulated in the optimal temperature range (31 to 34) by feeding in oxygen (10) and fuel (9) in such a way that the gases exiting the kiln have a temperature between 500 and 850°C.

2. The process in accordance with claim 1, characterized in that the combustion products from which the mercury was removed are directly removed from the rotating tube (5) of the kiln (4).

3. The process in accordance with claim 1, characterized in that the combustion products from which the mercury was removed are reversed at the end of the rotating tube (5) of the kiln (4) and are removed while being moved and with the air excluded.

4. The process in accordance with claim 1, characterized in that the rotating tube (5) is rotated at a rotating speed of 0.5 to 3 rpm.

5. The process in accordance with claim 1, characterized in that the exhaust gases of the rotating tube kiln (4) are first passed through a cyclone (13) in which the solids are separated to a large extent and are thereafter returned to the kiln (4).

6. The process in accordance with claim 5, characterized in that the exhaust gases, from which the solids have been removed to a large extent are heated in an afterburner (14) at temperatures between 800 to 1200°C in order to completely burn PCBs and dioxins as well as other organic portions, after which the heated exhaust gases are quenched (22) in order to prevent a dioxin recombination.

7. The process in accordance with claim 1, characterized in that the wash water, with which the mercury has been washed out (16) of the exhaust gases, is neutralized and the solid neutralization products which have been sedimented out are returned (17) into the kiln (4), while the metallic mercury is separated from the process for reuse.

8. The process in accordance with claim 1, characterized in that the washed exhaust gases are passed through an activated charcoal filter (18), wherein the burdened activated charcoal is respectively returned (19) to the rotating tube kiln (4) and is burned.

9. The process in accordance with claim 1, characterized in that the rotating tube kiln (4) is fueled with used oil containing heavy metals.

10. The process in accordance with claim 1, characterized in that the rotating tube kiln is fired with gaseous or liquid fuels to which contaminated oil sludge is added.

## Revendications

1. Procédé d'élimination du mercure de substances organiques, minérales et/ou métalliques, contaminées par du mercure, par traitement thermique dans un four, les fractions de mercure étant ce faisant évaporées et enfin enlevées par lavage des gaz de combustion et séparées, les substances contaminées broyées (2) étant introduites de façon continue dans un four tubulaire rotatif (4), à travers lequel les substances, par une dépression dans le four, circulent à contre-courant dans la direction de la flamme, caractérisé en ce que le procédé est réalisé dans un four tubulaire rotatif (4) ne présentant pas de revêtement intérieur, à une température de paroi du four extérieure comprise entre 200 et 300 ° C, la température du four de l'extérieur étant mesurée en divers endroits (30) du four répartis sur toute la longueur du parcours et étant réglée selon la gamme de températures optimale (31-34) par l'amenée d'oxygène (10) et de combustible (9) de telle sorte que les gaz sortant du four présentent une température comprise entre 500 et 850 ° C.

2. Procédé selon la revendication 1, caractérisé en ce que les produits de combustion démercurisés sont défournés directement depuis le tube rotatif (5) du four (4).

3. Procédé selon la revendication 1, caractérisé en ce que les produits de combustion démercurisés sont déviés à l'extrémité du tube rotatif (5) du four (4) et sont défournés sous agitation et à l'abri de l'air.

4. Procédé selon la revendication 1, caractérisé en ce que le tube rotatif (5) du four (4) tourne selon une vitesse de rotation comprise entre 0,5 et 3 tpm.

5. Procédé selon la revendication 1, caractérisé en ce que les gaz d'échappement du four tubulaire rotatif (4) sont d'abord passés à travers un cyclone (13), dans lequel les matières solides sont en grande partie séparées, qui sont ensuite ramenées dans le four (4).

6. Procédé selon la revendication 5, caractérisé en ce que les gaz d'échappement en grande partie débarrassés de matières solides sont chauffés dans un post-brûleur (14) à des températures comprises entre 800 et 1 200 ° C, pour brûler totalement le biphénylène surchloré et les dioxines, ainsi que d'autres fractions organiques, les gaz d'échappement chauffés étant alors refroidis brusquement (22) pour éviter la recombinaison des dioxines.

7. Procédé selon la revendication 1, caractérisé en ce que le mercure issu des gaz d'échappement a été lavé (16) par l'eau de lavage, que celle-ci est neutralisée, et en ce que les produits de neutralisation solides sédimentés sont réinjectés (17) dans le four (4), tandis que le mercure métallique obtenu à l'issue du processus est séparé pour une réutilisation.

8. Procédé selon la revendication 1, caractérisé en ce que les gaz d'échappement lavés sont passés à travers un filtre au charbon actif (18), le charbon actif chargé étant chaque fois réinjecté (19) dans le four tubulaire rotatif (4) et brûlé.

9. Procédé selon la revendication 1, caractérisé en ce que le four tubulaire rotatif (4) est alimenté en huile usée chargée de métaux lourds.

10. Procédé selon la revendication 1, caractérisé en ce que le four tubulaire rotatif est chauffé par des matières combustibles gazeuses ou liquides, dont les crasses d'huile contaminées sont ajoutées.
